# EUROPÄISCHE PATENTSCHRIFT

(11) **EP 2 137 276 B1**
(45) Veröffentlichungstag und Bekanntmachung des Hinweises auf die Patenterteilung: **27.04.2011**
(21) Anmeldenummer: 08707699.8
(22) Anmeldetag: 13.02.2008
(51) Int. Cl.: C09J 131/04, C08K 5/07

(54) **VERNETZBARE POLYMERDISPERSIONEN, VERFAHREN ZU DEREN HERSTELLUNG UND VERWENDUNG**
CROSS-LINKABLE POLYMER DISPERSIONS, METHOD FOR THE PRODUCTION THEREOF AND USE THEREOF
DISPERSIONS POLYMÈRES, PROCÉDÉ POUR SA PRÉPARATION ET SON UTILISATION

(30) Priorität: 14.03.2007 DE 102007012247
(43) Veröffentlichungstag der Anmeldung: 30.12.2009
(73) Patentinhaber: Celanese Emulsions GmbH, 61476 Kronberg/Ts. (DE); OXEA GmbH, 46147 Oberhausen (DE)
(72) Erfinder: BALZAREK, Christoph, 47803 Krefeld (DE); JAKOB, Martin, 65779 Kelkheim (DE)
(74) Vertreter: Ackermann, Joachim
(86) Internationale Anmeldenummer: PCT/EP2008/001090
(87) Internationale Veröffentlichungsnummer: WO 2008/110242

(56) Entgegenhaltungen:
- EP-A- 0 686 682
- EP-A- 0 829 509
- GB-A- 1 297 709
- US-A- 4 100 137

## Beschreibung

Die vorliegende Erfindung betrifft Polymerdispersionen mit ausgewählten Polyaldehyden als Vernetzungsmitteln. Daraus lassen sich vorzugsweise wässrige Dispersionsklebstoffe, insbesondere solche auf Polyvinylester Basis, mit einer praxisgerechten Topfzeit formulieren, deren Verfilmungen eine erhöhte Wasserresistenz aufweisen. Die Erfindung betrifft ferner die Herstellung dieser Polymerdispersionen sowie deren Verwendung zum Verkleben von porösen und semiporösen Substraten.

Wäßrige Polymerdispersionen, insbesondere von Polyvinylestem, wie Polyvinylacetat, werden als Weißleime zum Kleben von Holz und anderen porösen Substraten verwendet. Die Chemie dieser in großem Umfang industriell hergestellten Klebstoffe ist seit langem Gegenstand der Patentliteratur und ist in Fachpublikationen, beispielsweise in Wood Adhesives - Chemistry and Technology, Band 1, Kapitel 7, Marcel Dekker, New York, 1983, beschrieben worden.

Eine Untergruppe der Polyvinylesterdispersionen bilden solche mit erhöhter Wasserresistenz ihrer Verfilmungen. Die Anfälligkeit von Klebverbindungen auf Polyvinylester-Basis gegenüber Wasser beruht zum größten Teil auf der Anwesenheit von hydrophilen Stabilisierungsmitteln, insbesondere von Polyvinylalkohol, die üblicherweise bei der Herstellung der Klebstoffdispersion eingesetzt werden. Ein möglicher Weg, eine Verbesserung der Wasserresistenz zu erreichen, besteht daher beispielsweise darin, die Hydrophilie des Klebstoffs durch eine Vernetzung des Polyvinylalkohols mit reaktiven Verbindungen zu vermindern.

So ergibt laut DE-B-2,261,402 eine Polyvinylesterdispersion, der ein vernetzend wirkendes Harz, beispielsweise ein Harnstoff-Formaldehydharz zugemischt wird, in Kombination mit einer freien organischen oder anorganischen Säure oder einem sauren Metallsalz wasserfeste Verklebungen.

Ein weiterer seit längerem bekannter Weg, die Hydrophilie des Klebstoffes zu vermindern, besteht in der Copolymerisation von Vinylestern in Gegenwart von mit Polyvinylalkohol vernetzbaren Monomeren wie N-Methylol(meth)acrylamid. In Kombination mit sauren Härtern, beispielsweise organischen Säuren oder sauren Ammoniumsalzen, werden wasserresistente Klebstoffe erhalten. Beispiele für sauer katalysiert vernetzende Klebstoffsysteme finden sich in US-A 3,301,809, US-A 3,563,851, DE-C 26 20 738 und DE-A 39 42 628.

Gegenüber diesen ausschließlich durch saure Härter katalysiert vernetzenden Klebstoffsystemen ist auch bekannt, den Dispersionen nachträglich verschiedene Additive zuzusetzen, die die Wasserfestigkeit von mit diesen Dispersionen hergestellten Klebeverbindungen erhöhen. Die Wirkung dieser Additive beruht auf Vernetzungsreaktionen, die den Polyvinylalkohol einbeziehen. Als Additive werden in US-A-3,931,088 hydrophobe aliphatische oder aromatische Polyisocyanate vorgeschlagen; oder in EP-A-206,059 in Wasser dispergierbare Polyisocyanat-Zubereitungen, in der die Isocyanatgruppen mit Emulgatoren partiell maskiert sind.

Eine weitere Gruppe von Additiven, die die Wasserresistenz von Dispersionsklebstoffen verbessern, stellen polyfunktionelle Aldehyde dar. In US-A 3,932,335 werden durch Zusatz von Glyoxal in Kombination mit wasserlöslichen Polyolen Polyvinylesterdispersionen erhalten, die wasserfeste Klebverbindungen ergeben.

EP-A-191,460 beschreibt mit Polyvinylalkohol stabilisierte Polyvinylacetatdispersionen, die mit Glutardialdehyd vernetzt werden und über einen Zeitraum von mindestens 30 Minuten kochwasserresistente Filme liefern.

EP-A-834,530 beschreibt wasserbeständige Zusammensetzungen enthaltend einen Polyvinylalkohol mit einer an einen Phenylrest gebundenen Aminogruppe sowie ein die Wasserbeständigkeit verleihendes Mittel, nämlich Polyepoxide, Aldehyde, Polyisocyanate oder wasserlösliche Oxidationsmittel.

EP-A-413,136 beschreibt Polymerzusammensetzungen und daraus hergestellte Klebmittel, die Verklebungen mit guter Wasserbeständigkeit ergeben. Die Klebmittel enthalten neben wasserlöslichem Polyvinylalkohol, eine Aminverbindung, ein Vernetzungsmittel und mindestens eine wasserunlösliche und basenlösliche oder -quellbare Substanz. Gegebenenfalls können die Klebmittel noch eine wässrige Emulsion enthalten. Als Vernetzungmittel werden Verbindungen eingesetzt, die mit dem Polyvinylalkohol und der Aminoverbinung umsetzbar sind. Als Beispiele werden Epoxyverbindungen, Verbindungen auf Aldehydbasis, Aziridinverbindungen, Verbindungen auf Isocyanatbasis, Aminoplastverbindungen und mehrwertige Metallverbindungen genannt.

WO-A-98/12,237 beschreibt selbstvernetzende wässrige Dispersionen. Diese enthalten neben ausgewählter Vinyl-Polymerkomponente, Vernetzer, Additiven und Lösungsmittel. Als Vernetzer werden aliphatische Dialdehyde, wie Glyoxal, sowie cyclische Dialdehyde, wie Furaldehyde, oder Dialkoxyfurane oder -pyrane offenbart. Die Dispersionen können als Rückseitenbeschichtungen oder als Bindemittel eingesetzt werden.

JP-A 2001/335763, beschreibt zweikomponentige Raum-Temperatur-härtende Klebstoffzusammensetzungen basierend auf mit Amino-Gruppen ausgerüsteten Polyvinylestern. Als zweite Flüssig-Komponente wird Dialdehyd-Stärke verwendet. Diese Produkte werden durch oxidativen Aufschluß von Stärke gewonnen, sind aber selbst noch sehr gut wasserlöslich und erfüllen die Anforderungen nach hoher Wasserbelastbarkeit der Klebverbindungen noch nicht.

DE-A-198 30 555 beschreibt die Verwendung wässeriger Polymerzubereitungen enthaltend ein filmbildendes Polymer in Form einer Dispersion für die Beschichtung polyurethanhaltiger Substrate. Eingesetzt werden Polymere enthaltend von ethylenisch ungesättigten Harnstoffen, Thioharnstoffen oder deren cyclischen Derivaten abgeleitete Gruppen copolymerisiert mit Acrylaten, Vinylestern oder Vinylaromaten in Kombination mit Di- oder Polyaldehyden. Neben aliphatischen Dialdehyden wird Terephthaldialdehyd vorgeschlagen. Diese Systeme werden im Alkalischen vernetzt, so daß deren Einsatz in Dispersionen, die überwiegend auf Basis leicht alkalisch verseifbarer Polymere wie beispielsweise auf Vinylesterbasis aufgebaut sind, ausscheidet.

Aus EP-A-686,682 sind wässrige Polyvinylester-Dispersiorisklebstoffe bekannt, die polymere Schutzkolloide enthalten, damit komplexierbare wasserlösliche Verbindungen und zumindest teilweise maskierte Polyaldehyde mit mindestens drei Kohlenstoffatomen, aus denen in sauren Medien Aldehydgruppen kontrolliert freisetzbar sind. Diese Klebstoffe weisen neben praxisgerechten Topfzeiten sehr gute Klebeigenschaften auf und die Klebverbindungen besitzen eine sehr gute Wasserfestigkeit. Mit diesen Dispersionen lassen sich Klebstoffe formulieren, die alle Beanspruchungsgruppen der DIN EN 204, also Kaltwasserbeständigkeit nach Durability Class D3 und Heißwasserbeständigkeit nach Durability Class D4) abdecken.

Der Markt verlangt zunehmend nach Produkten, die anspruchsvolleren Standards genügen, bei der die Klebverbindungen beispielsweise auch wiederholten Kochwasserbehandlungs-/Trocknungszyklen ausgesetzt werden. Dieses kann durch Additivierung mit Spezialharzen, z. B. Phenol-Formaldehyd-Harzen, oder Isocyanatbasierten Systemen erfolgen. Derartige Zweikomponenten-Kleber auf der Basis von Emulsionspolymerisaten und Polyisocyanaten sind z. B. aus der EP-A 1 134 244 und vielen anderen Schriften bekannt. Ein bekannter Nachteil dieser Systeme ist die Schaumbildung durch freiwerdendes Kohlendioxid durch die allmähliche Hydrolyse der Isocyanatgruppen in wässeriger Phase. Produkte mit vergleichbarem Anwendungsprofil, welche andere vernetzende Systeme enthalten, sind auf Basis von anderen Polymeren als Polyurethanen bislang nicht bekannt geworden.

Es bestand demnach die Aufgabe wässerige Dispersionen bereitzustellen, die sich beispielsweise zu Klebverbindungen oder zu anderen Produkten mit sehr hoher Kochwasserbeständigkeit verarbeiten lassen, welche auch aus mehreren Zyklen bestehende Kochwasserbelastungstests bestehen.

Eine weitere Aufgabe bestand in der Bereitstellung von Dispersionen, welche sich zu Produkten, z.B. zu Filmen mit sehr hoher Wasserbeständigkeit verarbeiten lassen, die sich aus vergleichsweise einfachen und gut verfügbaren Chemikalien formulieren lassen.

Es wurde nun gefunden, daß diese Aufgaben durch ausgewählte Zusammensetzungen gelöst werden können.

Die vorliegende Erfindung betrifft eine Zusammensetzung enthaltend eine wässrige Polymerdispersion, wobei das Polymere abgeleitet ist von mindestens einem radikalisch polymerisierbaren ethylenisch ungesättigten Monomeren, und enthaltend mindestens ein Schutzkolloid und/oder mindestens einen Emulgator, sowie mindestens einen cycloaliphatischen Kohlenwasserstoff mit zwei bis sechs Aldehydgruppen, wobei das Polymer und/oder das Schutzkolloid und/oder der Emulgator mit Aldehyden vernetzbare Gruppen aufweist.

In einer bevorzugten Ausführungsform betrifft die Erfindung eine Mehrkomponenten-Zusammensetzung enthaltend mindestens eine Komponente A und mindestens eine Komponente B, wobei Komponente A eine wässrige Polymerdispersion mit einem pH-Wert von 2 bis 7 ist, welche
a) mindestens ein Polymer enthält, das ausgewählt wird aus der Gruppe der von Vinylestern abgeleiteten Polymeren, der von Estern α, β-ethylenisch ungesättigter C₃-C₈-Mono- oder Dicarbonsäuren abgeleiteten Polymeren und/oder der von Alkenylaromaten abgeleiteten Polymeren, und
b) mindestens ein Schutzkolloid und/oder mindestens einen Emulgator enthält, wobei
c) das Polymer und/oder das Schutzkolloid und/oder der Emulgator mit Aldehyden vernetzbare Gruppen aufweist, und wobei

Komponente B einen cycloaliphatischen Kohlenwasserstoff mit zwei bis sechs Aldehydgruppen enthält.

Gegenstand der Erfindung ist auch die durch Kombination der Komponenten A und B erhaltene vernetzbare Zusammensetzung sowie das aus den vernetzbaren Zusammensetzungen erhältliche vernetzte Produkt.

Die Emulsionspolymerisate, welche als Polymerbasis in den erfindungsgemäßen Zusammensetzungen eingesetzt werden, sind im Wesentlichen auf Basis von ein oder mehreren ethylenisch ungesättigten Verbindungen aufgebaut; dabei handelt es sich vorzugsweise um von Vinylestern und/oder von Estern α, β-ethylenisch ungesättigter C₃-C₈-Mono- oder Dicarbonsäuren und/oder von Alkenylaromaten abgeleitete Polymere.

Als Basis für die genannten Polymerklassen kommen prinzipiell folgende Gruppen an Monomeren in Betracht:

Eine Gruppe bilden Vinylester von ein bis achtzehn Kohlenstoffatome aufweisenden Monocarbonsäuren, beispielsweise Vinylformiat, Vinylacetat, Vinylpropionat, Vinylisobutyrat, Vinylvalerat, Vinylvalerat, Vinylpivalat, Vinyl-2-ethylhexanoat, Vinyldecanoat, Isopropenylacetat, Vinylester von gesättigten verzweigten Monocarbonsauren mit 5 bis 15 Kohlenstoffatomen im Säurerest, insbesondere Vinylester der Versatic^{™}-Säuren, Vinylester von langerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat. Unter diesen ist jedoch Vinylacetat als Hauptmonomer besonders bevorzugt.

Eine weitere Gruppe von Monomeren, die neben den Vinylestern und/oder Estern α, β-ethylenisch ungesättigter C₃-C₈-Mono- oder Dicarbonsäuren und/oder Alkenylaromaten eingesetzt werden können, bilden aliphatische, monoolefinisch oder diolefinisch ungesättigte, gegebenenfalls halogen-substituierte Kohlenwasserstoffe, wie Ethen, Propen, 1-Buten, 2-Buten, Isobuten, konjugierte C₄-C₈-Diene, wie1,3-Butadien, Isopren, Chloropren, Vinylchlorid, Vinylidenchlorid, Vinylfluorid oder Vinylidenfluorid.

Eine weitere Gruppe von Monomeren bilden Ester α, β-ethylenisch ungesättigter C₃-C₈-Mono- oder Dicarbonsäuren mit vorzugsweise C₁-C₁₈-Alkanolen und insbesondere C₁-C₈-Alkanolen oder C₅-C₈-Cycloalkanolen in Frage. Bei den Estern der Dicarbonsäuren-kann es sich um Halbester oder vorzugsweise um Diester handeln. Geeignete C₁-C₈-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beispiele sind Ester der Acrylsäure, der Methacrylsäure, der Crotonsäure, der Maleinsäure, der Itaconsäure, Citraconsäure oder der Fumarsäure wie (Meth)acrylsäuremethylester, (Meth)acrylsäureethylester, (Meth)acrylsäure-isopropylester, (Meth)acrylsäure-n-butylester, (Meth)acrylsäureisobutyl-ester, (Meth)acrylsäure-1-hexylester, (Meth)acrylsäure-tert-butylester, (Meth)acrylsäure-2-ethylhexylester, Di-n-methylmaleinat oder -fumarat, Di-n-ethylmaleinat oder -fumarat, Di-n-propylmaleinat oder -fumarat, Di-n-butylmaleinat oder -fumarat, Diisobutylmaleinat oder -fumarat, Di-n-pentylmaleinat oder -fumarat, Di-n-hexylmaleinat oder fumarat, Dicyclohexyl-maleinat oder -fumarat, Di-n-heptylmaleinat oder -fumarat, Din-octylmaleinat oder -fumarat, Di-(2-ethylhexyl)maleinat oder -fumarat, Di-n-nonylmaleinat oder -fumarat, Di-n-decylmaleinat oder -fumarat, Di-n-undecylmaleinat oder -fumarat, Dilaurylmaleinat oder -fumarat , Dimyristiylmaleinat oder -fumarat, Dipalmitoylmaleinat oder -fumarat, Di-stearylmaleinat oder -fumarat und Diphenylmaleinat oder -fumarat.

Eine weitere Gruppe von Monomeren bilden die Alkenylaromaten. Dabei handelt es sich um Monoalkenylaromaten. Beispiele dafür sind Styrol, Vinyltoluol, Vinylxylol, α-Methylstyrol oder o-Chlorstyrol.

Die genannten Monomere bilden in der Regel die Hauptmonomeren, die in Bezug auf die Gesamtmenge der nach dem Verfahren der radikalischen wässrigen Polymerisation zu polymerisierenden Monomeren normalerweise einen Anteil von mehr als 50 Gew. %, bevorzugt mehr als 75 % auf sich vereinen.

Die Monomeren sind vorzugsweise so auszuwählen, dass ein Polymerisat oder Copolymerisat mit Klebstoffeigenschaften entsteht. Dieses kann durch Einstellung der Glasübergangstemperatur der entstehenden Polymerisate in an sich bekannter Weise erfolgen.

Bevorzugte Hauptmonomere sind auf Basis folgender Polymerklassen aufgebaut:

Homo-oder Copolymere ein oder mehrerer Vinylester, insbesondere von Vinylacetat; Copolymere von Vinylestern mit Estern α, β-ethylenisch ungesättigter C₃-C₈-Mono- oder Dicarbonsäuren mit C₁-C₈-Alkanolen, insbesondere Ester der (Meth)acrylsäure und Malein-/oder Fumarsäure; Copolymere der Vinylester, insbesondere Vinylacetat, mit Ethen; Terpolymere aus Vinylestern, Ethen und Estern α, β-ethylenisch ungesättigten C₃-C₈-Mono- oder Dicarbonsäuren mit C₁-C₈-Alkanolen, insbesondere Estern der (Meth)acrylsäure und Malein-/oder Fumarsäure; Homo- oder Copolymere von Estern der (Meth)acrylsäure; Copolymere des Styrols mit Butadien und/oder Estern der α, βethylenisch ungesättigten C₃-C₈-Mono- oder Dicarbonsäuren mit C₁-C₈-Alkanolen, insbesondere Estern der (Meth)acrylsäure.

Selbstverständlich können weitere Comonomere, welche die Eigenschaften in gezielter Weise modifizieren, bei der Polymerisation mitverwendet werden. Solche Hilfsmonomere werden im Normalfall lediglich als modifizierende Monomere in Mengen, bezogen auf die Gesamtmenge der zu polymerisierenden Monomeren, von weniger als 50 Gew. %, in der Regel von weniger als 20, vorzugsweise zu weniger als 10 Gew. % einpolymerisiert.

Diese Monomeren dienen zur weiteren Stabilisierung der Dispersionen, können durch Vernetzung während der Polymerisation oder während der Verfilmung die Filmkohäsion oder andere Eigenschaften verbessern und/oder durch eine geeignete Funktionalität mit der Komponente B unter Vernetzung reagieren.

Monomere, die zur weiteren Stabilisierung dienen können, sind in der Regel Monomere, die eine Säurefunktion aufweisen und/oder deren Salze. Zu dieser Gruppe zählen beispielsweise α,ß-monoethylenisch ungesättigte Mono- und Dicarbonsäuren mit 3 bis 10 C-Atomen, ethylenisch ungesättigte Sulfonsäuren, ethylenisch ungesättigte Phosphonsäuren oder Dihydrogenphosphate und deren wasserlösliche Salze, z. B. deren Natriumsalze. Bevorzugte Monomere aus dieser Gruppe sind Vinylsulfonsäure und ihre Alkalisalze, Acrylamidopropansulfonsäure und ihre Alkalisalze, ethylenisch ungesättigte C₃-C₈-Carbonsäuren und C₄-C₈-Dicarbonsäuren, z. B. Itaconsäure, Crotonsäure, Vinylessigsäure, Acrylamidoglykolsäure und insbesondere Acrylsäure und Methacrylsäure.

Beispiele für vernetzende Hilfsmonomere sind zwei oder mehr Vinylreste aufweisende Monomere, zwei oder mehr Vinylidenreste aufweisende Monomere sowie zwei oder mehr Alkenylreste aufweisende Monomere. Besonders vorteilhaft sind dabei die Di-Ester zweiwertiger Alkohole mit α,ß-monoethylenisch ungesättigten Monocarbonsäuren, unter denen die Acryl und Methacrylsäure bevorzugt sind, die Di-Ester zweiwertiger Carbonsäuren mit ethylenisch ungesättigten Alkoholen, sonstige Kohlenwasserstoffe mit zwei ethylenisch ungesättigten Gruppen oder die Di-Amide zweiwertiger Amine mit α,ß-monoethylenisch ungesättigten Monocarbonsäuren.

Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate oder-methacrylate und Ethylenglykoldiacrylate oder-methacrylate, 1,2-Propylenglykoldimethacrylat, 1,3-Propylenglykol-dimethacrylat, 1,3-Butylenglykoldimethacrylat, 1,4-Butylenglykoldimethacrylate, Hexandioldiacrylat, Pentaerythroldiacrylat sowie Divinylbenzol, Vinylmethacrylat, Vinylacrylat, Vinylcrotonat, Allylmethacrylat, Allylacrylat, Diallylmaleat, Diallylfumarat, Diallylphthalat, Methylenbisacrylamid, Cyclopentadienylacrylat, Divinyladipat oder Methylenbisacrylamid.

Es können aber auch Monomere mit mehr als zwei Doppelbindungen eingesetzt werden, beispielsweise Tetraallyloxyethan, Trimethylolpropantriacrylat oder Triallylcyanurat.

Eine weitere Gruppe von Hilfsmonomeren ist geeignet, entweder durch Selbstvernetzung oder mit einem geeigneten monomeren Reaktionspartner und /oder mit dem aromatischen oder cycloaliphatischen Polyaldehyd unter ausgewählten Bedingungen unter Vernetzung zu reagieren:

Zu dieser Gruppe gehören Monomere mit N-funktionellen Gruppen, darunter insbesondere (Meth)-acrylamid, Allylcarbamat, Acrylnitril, Methacrylnitril, N-Methylol(meth)acrylamid, N-Methylolallylcarbamat sowie die N-Methylolester, - alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)-acrylamid, N-Dimethylaminopropyl(meth)-acrylamid, N-Methyl(meth)acrylamid, N-Butyl(meth)acrylamid, N-Cyclohexyl(meth)-acrylamid, N-Dodecyl(meth)acrylamid, N-Benzyl(meth)acrylamid, p-Hydroxyphenyl-(meth)acrylamid, N-(3-Hydroxy-2,2-dimethylpropyl)methacrylamid, Ethylimidazolidon(meth)acrylat, N-(Meth)acryloyloxyethylimidazolidin-1-on, N-(2-Methacrylamidoethyl)imidazolin-2-on, N-[3-Allyloxy-2-hydroxypropyl]aminoethyl]imidazolin-2-on, N-Vinylformamid, N-Vinylpyrrolidon oder, N-Vinylethylenharnstoff.

Eine weitere Gruppe von Hilfsmonomeren bilden hyroxyfunktionelle Monomere wie die Methacrylsäure- und Acrylsäure-C₁-C₉-Hydroxyalkylester, wie n-Hydroxyethyl-, n-Hydroxypropyl- oder n-Hydroxybutylacrylat und -methacrylat sowie deren Addukte mit Ethylenoxid oder Propylenoxid,

Eine weitere Gruppe von Hilfsmonomeren bilden solche, die über Carbonylgruppen vernetzbar oder selbstvernetzend sind. Beispiele sind Diacetonacrylamid, Allylacetoacetat, Vinylacetoacetat sowie Acetoacetoxyethylacrylat oder - methacrylat.

Eine weitere Gruppe von Hilfsmonomeren besteht aus Silangruppen enthaltenden Monomeren z. B. Vinyltrialkoxysilane, wie Vinyltrimethoxysilan, Vinyltriethoxysilan, Alkylvinyldialkoxysilane oder (Meth)acryloxyalkyltrialkoxysilane, z. B. (Meth)acryloxyethyltrimethoxysilan, oder(Meth)acryloxypropyltrimethoxysilan.

Eine weitere Gruppe von Hilfsmonomeren besteht aus epoxygruppenhaltigen Monomeren wie beispielsweise Allylglycidylether, Methacrylglycidylether, Butadienmonoepoxide, 1,2-Epoxy-5-hexen, 1,2-Epoxy-7-octen, 1,2-Epoxy-9-decen, 8-Hydroxy-6,7-epoxy-1-octen, 8-Acetoxy-6,7-epoxy-1-octen, N-(2,3-Epoxy)-propylacrylamid, N-(2,3-Epoxy)-propylmethacrylamid, 4-Acrylamidophenylglycidylether, 3-Acrylamidophenylglycidylether, 4-Methacrylamidophenylglycidylether, 3-Methacrylamidophenylglycidylether, N-Glycidoxymethylacrylamid, N-Glycidoxypropylmethacrylamid, N-Glycidoxyethylacrylamid, N-Glycidoxyethylmethacrylamid, N-Glyctdoxy-propylacrylamid, N-Glycidoxypropylmethacrylamid, N-Glycidoxybutylacrylamid, N-Glycidoxybutylmeth-acrylamid, 4-Acrylamidomethyl-2,5-dimethylphenylglycidylether, 4-Methacrylamido-methyl-2,5-dimethyl-phenylglycidylether, Acrylamidopropyldimethyl-(2,3-epoxy}-propylammoniurnchlorid, Methacrylamidopropyldimethy-(2,3-epoxy)-propyl-ammoniumchlorid und Glycidylmethacrylat.

Neben dem homo- oder copolymeren Polymeren enthalten die erfindungsgemäßen Dispersionen vorzugsweise Schutzkolloide. Dabei handelt es sich um polymere Verbindungen, welche während der Emulsionspolymerisation zugegen sind und die Dispersion stabilisieren.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder von Acrylsäure, Methacrylsäure, Maleinsäure, Maleinsäureanhydrid, Methylvinylether, Styrol, 2-Acryl-amido-2-methylpropansulfonsäure und/oder 4-Styrolsulfonsäure abgeleitete Polymerisate und deren Alkalimetallsalze aber auch Polymere abgeleitet von N-Vinylpyrrolidon, N-Vinylcaprolactam, N-Vinylcarbazol, 1-Vinyl-imidazol, 2-Vinylimidazol, 2-Vinylpyridin, 4-Vinylpyridin, Acrylamid, Methacrylamid, amingruppentragenden Acrylaten, Methacrylaten, Acrylamiden und/oder Methacrylamiden. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Handelt es sich beim den Schutzkolloiden um Polyvinylalkohol, wird insbesondere Polyvinylalkohol vom Hydrolysegrad 60-100 Mol.-%, vorzugsweise 70 bis 98 Mol.-%, und Viskositäten der 4 Gew.-%igen wäßrigen Lösungen bei 20 °C von 2 bis 70 mPa*s oder Gemische dieser Typen verwendet. Neben "homopolymerem" Polyvinylalkohol, d.h. nur aus Vinylalkohol- und restlichen Vinylacetatgruppen bestehendem Polyvinylalkohol, können copolymere bzw. funktionalisierte Polyvinylalkohole eingesetzt werden, beispielsweise Umsetzungsprodukte des Polyvinylalkohols mit Diketen oder mit Carboxylgruppen, Thiolgruppen, Formamidogruppen, Aminogruppen, Arylaminogruppen, Sulfatgruppen, Sulfonatgruppen, Phosphonatgruppen, quaternäre Ammoniumgruppen und andere funktionelle Gruppen tragende Typen von Polyvinylalkoholen.

Besonders bevorzugt werden in der Polymerdispersion Schutzkolloide verwendet, die Komplexe oder koordinative Bindungen mit einer Verbindungsgruppe eingehen können, ausgewählt aus der Gruppe der sauren Metallsalze beziehungsweise Salze oder Säuren von Oxoanionen, insbesondere Aluminiumchlorid, Aluminiumnitrat, Titansulfat oder Zirkonoxychlorid, beziehungsweise Phosphorsäure oder Borsäure.

Die genannten polymeren Stabilisatoren können der Dispersion gegebenenfalls auch während oder nach der Polymerisation zugesetzt werden.

Bezogen auf den Feststoffanteil der Polymerdispersion beträgt der Anteil der polymeren Schutzkolloide vorzugsweise 1 bis 35 Gew.-%, insbesondere 2 bis 20 Gew.-%.

Zusätzlich zu oder anstelle von den Schutzkolloiden kann Polymerdispersion auch mit Emulgatoren stabilisiert sein. Dabei kann es sich um ionische, vorzugsweise anionische, oder insbesondere um nichtionische Netzmittel handeln. Eine Auflistung geeigneter Emulgatoren finden sich in Houben-Weyl, Methoden der organischen Chemie, Band XIV/I, Makromolekulare Stoffe, Georg- Thieme-Verlag, Stuttgart, 1961, S. 192-208).

Der Anteil der Emulgatoren kann bis zu 10 Gew.-%, bezogen auf den Feststoffanteil der Polymerdispersion betragen. Emulgatoren können bereits während der Polymerisation zugegen sein und/oder danach zugegeben werden.

Bevorzugt werden Dispersionen die Schutzkolloide enthalten und gegebenenfalls bis zu 2 Gew. %, bezogen auf den Feststoffanteil der Polymerdispersion an ionischen und/oder nichtionischen Emulgatoren.

Das Polymer und/oder das Schutzkolloid und/oder der Emulgator weist mit Aldehyden vernetzbare Gruppen auf. Dabei handelt es sich beispielsweise um aktivierte Methylengruppen, Amino-, Amido-, Ureido und insbesondere um Hydroxylgruppen.

Besonders bevorzugt werden wässerige Dispersionen verwendet, die Schutzkolloide mit Hydroxylgruppen aufweisen, insbesondere Polyvinylalkohol und alkylierte Cellulosen.

Als Polyaldehyde werden erfindungsgemäß cycloaliphatische Kohlenwasserstoffe mit zwei bis sechs Aldehydgruppen eingesetzt.

Cycloaliphatische Polyaldehyde leiten sich von mono- oder polycyclischen, bevorzugt von bicyclischen Kohlenwasserstoffen ab. Beispiele für monocyclische Kohlenwasserstoffe sind Cyclopentan, Cyclohexan, Cycloheptan oder Cyclooctan. Beispiele für bicyclische Kohlenwasserstoffe sind Norbonan, Norbornen oder Tricyclodecan ("TCD"). Diese Polyaldehyde weisen insbesondere zwei bis vier Aldehydgruppen auf. Diese können direkt mit dem cycloaliphatischen Kern kovalent verbunden sein oder über eine Brückengruppe, beispielsweise eine Alkylengruppe. Beispiele für bevorzugte Verbindungen dieses Typs sind Cyclohexandialdehyd, Cyclopentandialdehyd, Vinylcyclohexandialdehyd, Norbornandialdehyd, Norbornendialdehyd, Ethylnorbornandialdehyd oder besonders bevorzugt {3(4),8(9)-Bis(formyl)-tricyclo[5.2.1.0^{2.6}]decan oder "Tricyclodecandialdehyd" (="TCD-Dialdehyd").

Besonders bevorzugte Dialdehyde weisen die nachstehenden Strukturen der Formeln I bis IX auf 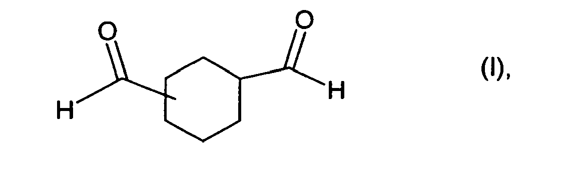 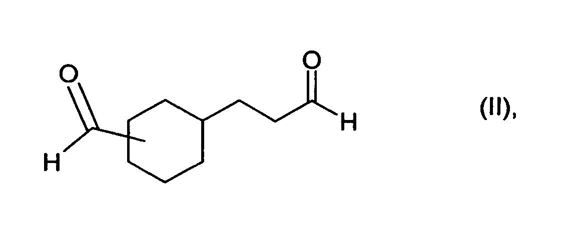 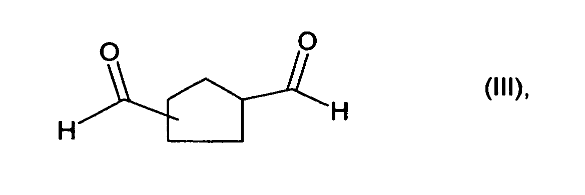 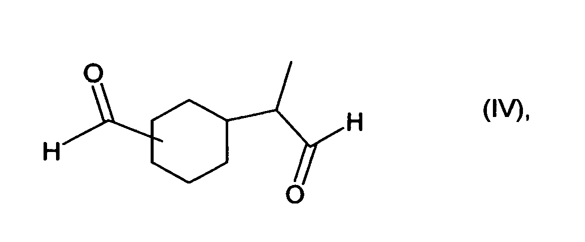 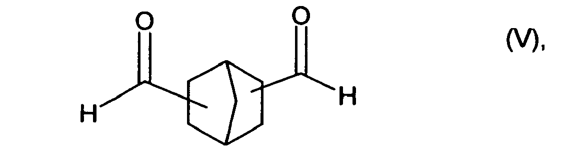 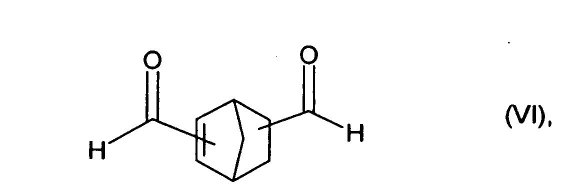 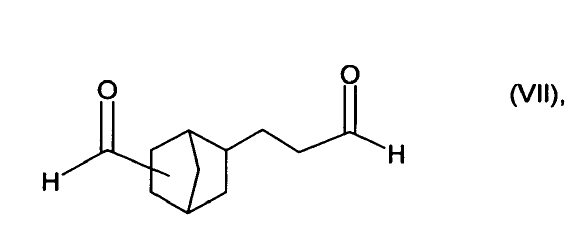 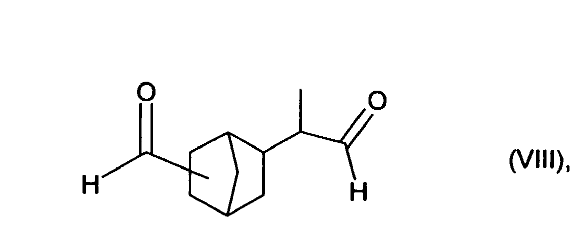 und

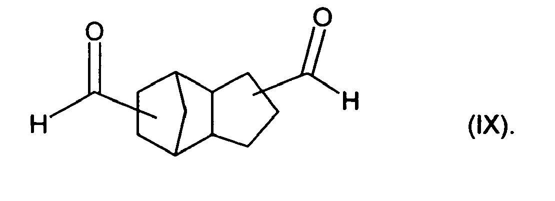

Die erfindungsgemäß eingesetzten Polyaldehyde sind an sich bekannte Verbindungen, die teilweise kommerziell erhältlich sind oder die nach bekannten Verfahren der organischen Chemie hergestellt werden können.

Die oben als besonders bevorzugt aufgezählten Dialdehyde von mono- oder bicyclischen Kohlenwasserstoffen können beispielsweise durch Hydroformylierung der entsprechenden Alkenylverbindungen hergestellt werden.

So lässt sich der besonders bevorzugt eingesetzte TCD-Dialdehyd beispielsweise nach dem aus der US-A-2005/0101805 bekannten Verfahren herstellen.

Die verwendete Menge der Polyaldehyde beträgt 0,001 Gew.-% bis 25 Gew.-%, bezogen auf die Festsubstanz der Polymerdispersion und hängt von der Art des eingesetzten Polyaldehyds sowie von der Zusammensetzung der Dispersion ab.

Der bevorzugte Bereich liegt zwischen 0,01 und 20 Gew.-%, insbesondere zwischen 0,1 und 15 Gew.-%, bezogen auf die Festsubstanz der Polymerdispersion.

Die erfindungsgemäße Zusammensetzung kann weitere übliche Additive enthalten, die typischerweise bei Klebstoff-Formulierungen oder bei Baustoff-Formulierungen eingesetzt werden. Dazu zählen beispielsweise Filmbildehilfsmittel zur Emiedrigung der Mindestfilmbildetemperatur ("MFT-Erniedriger"), Weichmacher, Puffer, pH-Stellmittel, Dispergiermittel, Entschäumer, Füllstoffe, Farbstoffe, Pigmente, Silan-Kupplungsmittel, Verdickungsmittel, Viskositätsregler, Lösungsmittel und/oder Konservierungsmittel.

Eine Gruppe von Additiven stellen weitere venetzend wirkende Verbindungen dar (externe Vernetzungsmittel), welche in niedermolekularer Form bzw. als Vernetzerharze zugesetzt werden können. Diese können den Effekt der Verbesserung der Kochwasserbeständigkeit in Kombination mit dem cycloaliphatischen Polyaldehyd noch weiter verbessern und werden daher in den erfindungsgemäßen Zusammensetzungen besonders bevorzugt eingesetzt.

Als externe Vernetzungsmittel eignen sich beispielsweise Phenol-Formaldehyd-Harze, Resorcin-Formaldehyd-Harze, Melamin-Formaldehyd-Harze, Hydroxymethyl-substituierte Imidazolidinone oder Thioimidazolidinone, Hydroxymethyl-substituierte Pyrimidinone oder Hydroxymethyl-substituierte Triazinone oder Glycolurile oder deren Selbstkondensationsprodukte oder gemischte Kondensate aus zwei oder mehr der genannten Verbindungen, oder ein Gemisch aus zwei oder mehr der genannten Verbindungen. Beispielhaft genannt seien hierfür 1,3-bis(hydroxymethyl)-4-methoxy-4,5,5-trimethyl-2-Imidazolidinon, N,N'-Dimethylol-4-methoxy-5,5-dimethylpropyleneurea, N,N',N",N"'-Tetrakis(hydroxymethyl)glycoluril, 4,5-Dihydroxy-1,3-bis(methoxymethyl)-2-imidazolidinon,4,5-Dihydroxy-1,3-bis(hydroxymethyl)-imidazolidin-2-on ,Tetrahydro-1,3-bis(hydroxymethyl)-4-methoxy-5,5-dimethylpyrimidin-2(1H)- on ,4,5-Dihydroxy-1,3-dimethylol-2-imidazolidinon, 4,5-Dihydroxy-1,3-dimethyl-2-imidazolidinon, Tetrahydro-1,3-bis(hydroxymethyl)-4-hydroxy-5,5-dimethyl-(1H)-pyrimidin-2- on, (=1,3-Dimethylol-4-methoxy-5,5-dimethylpropylenharnstoff), Tetrahydro-1,3-bis(hydroxymethyl)-4-alkoxy-5,5-dimethyl-(1H)-pyrimidin-2- on und N,N',N",N"'-Tetrakis(hydroxymethyl)glycoluril. Bevorzugt sind ebenfalls die in der EP-A 1 505 085 erwähnten partiell oder vollständig veretherten Harze auf Basis methylolierter Ethylenharnstoffe, Propylenharnstoffe, Glyoxaldiharnstoffe, Malondialdehyddiharnstoffe oder deren Kombinationen.

Eine weiterhin hervorragend geeignete Gruppe von externen Vernetzungsmitteln stellen andere Polyaldehyde wie aromatische Kohlenwasserstoffe mit zwei bis sechs Aldehydgruppen, Dialdehydstärken oder andere wasserlösliche Polyaldehyde, und ebenso die zumindest teilweise maskierten Polyaldehyde der EP-A-686,682 dar. Diese Verbindungen können in Kombination mit den erfindungsgemäß eingesetzten cycloaliphatischen Polyaldehyden zu einer höheren Vernetzungsdichte beitragen.

Die in den erfindungsgemäßen Zusammensetzungen gegebenenfalls eingesetzten aromatischen Polyaldehyde leiten sich vorzugsweise von Benzol oder Naphthalin ab. Diese Polyaldehyde weisen insbesondere zwei bis vier Aldehydgruppen auf. Diese können direkt mit dem aromatischen Kern kovalent verbunden sein oder über eine Brückengruppe, beispielsweise eine Alkylengruppe. Beispiele für bevorzugte Verbindungen dieses Typs sind Phthaldialdehyd, Isophthaldialdehyd, Terephthaldialdehyd sowie alkylsubstituierte Derivate dieser Verbindungen, wie Toluoldialdehyd.

Besonders bevorzugt werden Zusammensetzungen enthaltend zusätzlich mindestens teilweise maskierte Polyaldehyde.

Die Klebstoffdispersion besitzt einen sauren pH-Wert, der in einem Bereich liegt, in dem die Aldehydgruppen des cycloaliphatischen Polyaldehyds zu säurekatalysierten Vernetzungsreaktionen befähigt sind. Dieser pH-Bereich liegt vorzugsweise zwischen 2 und 6, insbesondere zwischen 2,5 und 4,5. Ein geeigneter pH-Wert kann schon nach der Emulsionspolymerisation zur Herstellung der Polymerdispersion erreicht sein oder er kann durch Zugabe von sauren Verbindungen nachträglich eingestellt werden. Um den pH-Wert im angestrebten sauren Bereich einzustellen, sind organische oder anorganische Lewis- und Brφnsted-Säuren geeignet. Vorzugsweise geeignete Brφnsted-Säuren weisen einen pKₛ-Wert von <2,5 auf, beispielsweise Salzsäure, Schwefelsäure, Salpetersäure, Perchlorsäure, p-Toluolsulfonsäure, insbesondere Phosphorsäure. Als Lewis-Säure besonders geeignet sind die sauren Salze komplexierbarer Metallionen, insbesondere Aluminiumchlorid, Aluminiumnitrat, Zirkonoxychlorid und Titansulfat, insbesondere die sauren Salze mit mehrwertigen komplexierbaren Kationen, wie sie beispielsweise in DE-B 22 61 402, DE-C 26 20 738 und DE-A 39 42 628 aufgeführt sind.

Diese Produktgruppe der pH-Stellmittel ist vorzugsweise gleichzeitig zu Ausbildung von koordinativen Bindungen oder zur Komplexbildung mit den Schutzkolloiden der Polymerdispersion befähigt. Hierzu eignen sich insbesondere die sauren Salze komplexierbarer Metallionen, insbesondere Aluminiumchlorid, Aluminiumnitrat, Zirkonoxychlorid und Titansulfat, insbesondere die sauren Salze mit mehrwertigen komplexierbaren Kationen, wie sie beispielsweise in DE-B 22 61 402, DE-C 26 20 738 und DE-A 39 42 628 aufgeführt sind.

Bevorzugt werden Zusammensetzungen, bei denen wenigstens die Polymerdispersion, vorzugsweise das Gemisch aus Komponente A und B, einen pH Wert von 2 und 6, insbesondere zwischen 2,5 und 4,5 aufweist.

Eine spezielle Ausführungsform der erfindungsgemäßen Zusammensetzungen besteht darin, dass Komponente A und B vorformuliert werden und die zuvor erwähnten pH-Stellmittel den kombinierten Komponenten A und B nachträglich zugesetzt werden.

Der Feststoffgehalt der Komponente A bzw. der erfindungsgemäßen Polymerdispersion beträgt vorzugsweise 20 bis 70 Gew.-%, insbesondere 30 bis 65 Gew.-%.

Die Herstellung der Polymerdispersion wird unter den üblichen kontinuierlichen oder diskontinuierlichen Verfahrensweisen der radikalischen Emulsionspolymerisation vorgenommen.

Die Durchführung einer radikalisch initiierten wäßrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer La-tices, 2nd Edition, Vol. I, Seiten 33 bis 415, Chapman & Hall, 1997; H. Warson, The Applications of Synthetic Resin Emulsions, Seiten 49 bis 244, Ernest Bonn. Ltd.. London, 1972; D. Diederich, Chemie in unserer Zeit 1990, 24, Seiten 135 bis 142, Verlag Chemie, Weinheim; J. Piirma, Emulsion Polymerisation, Seiten I bis 287, Academic Press, 1982; F. Hölscher, Dispersionen synthetischer Hochpolymerer, Seiten I bis 160. Springer-Verlag, Berlin, 1969 und die Patentschrift DE-A 40 03 422]. Sie erfolgt üblicherweise so, daß man die ethylenisch ungesättigten Monomeren, häufig unter Mitverwendung von Dispergierhilfsmitteln, in wäßrigem Medium dispers verteilt und mittels wenigstens eines radikalischen Polymerisationsinitiators polymerisiert.

Hierbei kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, Natriumformaldehydsulfoxylat, Ascorbinsäure als Redoxkatalysatorsystem verwendet werden.

Die polymeren Schutzkolloide und/oder Emulgatoren können vor oder während der Polymerisation zugegeben werden. Eine zusätzliche Nachgabe von polymeren Stabilisatoren und/oder von Emulgatoren ist ebenfalls möglich. Zu dieser Dispersion werden dann gegebenenfalls noch für den gewünschten Anwendungszweck vorgesehene Additive zugegeben.

Bei Komponente B der erfindungsgemäßen Zusammensetzung handelt es sich üblicherweise um eine Lösung der Reinkomponente in einem Solvens, einer Emulsion oder um die Reinkomponente selbst, vorzugsweise um die Reinkomponente. Die Komponenten B lassen sich im Allgemeinen gut in die Komponente A einarbeiten.

Die Formulierung der der erfindungsgemäßen Zusammensetzungen kann in den dafür dem Fachmann bekannten Vorrichtungen erfolgen, beispielsweise in Rührkesseln bzw. geeigneten Mixern. Ein Vermischen der Komponenten erst kurz vor der Applikation z. B. durch Inline-Sprühpistolen oder ähnliche Geräte ist ebenfalls möglich.

Nach dem Vermischen der Komponenten A und B härtet die erfindungsgemäße Zusammensetzung aus und bildet das erfindungsgemäß gehärtete Produkt. Die Härtungsgeschwindigkeit kann durch geeignete Auswahl der Formulierung beeinflußt werden. Typische Härtungszeiten liegen zwischen 30 Minuten und 8 Stunden.

Die erfindungsgemäßen härtbaren Zusammensetzungen lassen sich zu Produkten mit sehr hoher Kochwasserbeständigkeit verarbeiten. Ohne auf eine Theorie festgelegt zu werden wird angenommen, dass die Anwesenheit der hydrophoben Polyaldehyde die Kochwasserbeständigkeit positiv beeinflußt. Da bei den Vernetzungsreaktionen von Mechanismen ausgegangen werden muß, die in wässeriger Phase ablaufen, ist das Ausmaß des beobachteten Effekts insofern überraschend, als daß es sich bei den erfindungsgemäßen Komponenten B um Produkte mit sehr niedriger Wasserlöslichkeit handelt.

Aus den erfindungsgemäßen härtbaren Zusammensetzungen hergestellte Klebverbindungen besitzen eine gegenüber vergleichbaren Systemen verbesserte Wasserbeständigkeit. Sie genügen damit gemäß der Prüfnorm DIN EN 204 wenigstens der Beanspruchungsgruppe D4 und übertreffen diese häufig sogar. Besonders hervorzuheben ist ihre Beständigkeit bei mehreren Belastungszyklen.

Gegenstand der Erfindung ist weiterhin die Verwendung der erfindungsgemäßen Zusammensetzung zum Verkleben von porösen und semiporösen Substraten.

Die spezielle Eignung der erfindungsgemäßen Zusammensetzungen liegt in der Anwendung als kochwasserresistenter Klebstoff insbesondere für cellulosische Substrate wie Holz, insbesondere Massivholz oder von Holz abgeleiteten Materialien und Werkstoffen, beispielsweise Furnieren, Sperrholz, Schichtholz, Lagenholz, Kunstharzpressholz, Verbundplatten oder Holzfaserwerkstoffen wie porösen, diffusionsoffenen, harten oder mitteldichten Holzfaserplatten (MDF) oder Kunststoff-beschichteten dekorativen Holzfaserplatten. Die Dispersionen eignen sich für die manuelle oder maschinelle Applikation sowie insbesondere auch für Anwendungen, in denen die Klebfugen durch hochfrequente Wechselströme gehärtet werden.

Weitere generelle Anwendungsbeispiele sind wasserfeste Verklebungen von Papier, Pappe, Wellpappe, Schaumstoff, Zement, Leder, Textil oder Preßschichtstoffen.

Andere Anwendungen liegen in Klebstoffen für den Baubereich als Fußboden-, Wand- oder Deckenklebstoff oder als Möbelfolien- oder Teppichrückenkleber.

Weitere Eignungsgebiete liegen in wasserfesten Bindemitteln für Holzfaserplatten oder Faserleder sowie Bindemittel für Dämm-Materialien aus Papier- oder Kunststoff-Fasern, ferner in wasserresistenten Baustoffdispersionen als Bindemittel für Putz oder Zement.

Ein weiteres Einsatzgebiet für die erfindungsgemäßen Zusammensetzungen sind Bindemittel für Textil und Non-Woven (sog. Engineered Fabrics) sowie im Textildruck und als Textilappretur.

Ein bevorzugtes Einsatzgebiet besteht in der Verwendung als Bindemittel für Glasfasern, welche beispielsweise zur Verfestigung von Kunststoff-Fliesen, Formkörpern und als Dämmmaterial verwendet werden oder als Bindemittel für Keramik..

Es ist hervorzuheben, daß es sich bei den erfindungsgemäßen Zusammensetzungen um Systeme handelt, die Isocyanat-frei sind.

Die nachfolgenden Beispiele dienen der Erläuterung der Erfindung. Die in den Beispielen angegebenen Teile und Prozente beziehen sich auf das Gewicht, soweit nicht anders vermerkt.

### Basisdispersion A1

Verwendet wurde Mowilith^{®} LDL 2555 W, Handelsware der Celanese Emulsions GmbH, eine durch Emulsionspolymerisation hergestellte wässerige Dispersion von Polyvinylacetat, welche eine geringe Menge von N-Methylolacrylamid abgeleiteten Struktureinheiten enthielt. Die Dispersion enthielt Polyvinylalkohol als Schutzkolloid und AICl₃ als sauren Vernetzungskatalysator. Der pH-Wert liegt bei 2,8 bis 3,6.

Der Feststoffgehalt der Dispersion beträgt 49-51 Gew. %; die Viskosität, ermittelt nach Brookfield, RVT 6/20 beträgt 9.000 -15.000 mPa*s.

### Basisdispersion A2

Verwendet wurde Mowilith^{®} LDL 1400 W, Handelsware der Celanese Emulsions GmbH, eine durch Emulsionspolymerisation hergestellte wässerige Dispersion von Polyvinylacetat-Homopolymer. Die Dispersion enthielt Polyvinylalkohol als Schutzkolloid und AICl₃ als sauren Vernetzungskatalysator. Der pH-Wert liegt bei 2,8 - 3,2. Außerdem enthielt die Dispersion als Vernetzer einen als Bisulfitaddukt maskierten Polyaldehyd gemäß EP-A-0 686 682. Der Feststoffgehalt der Dispersion beträgt 46 - 50 Gew. %; die Viskosität, ermittelt nach Brookfield, RVT 6/20 beträgt 3.000 - 9.000 mPa*s.

### Basisdispersion A3

Verwendet wurde Mowilith^{®} LDL 2530 W, Handelsware der Celanese Emulsions GmbH, eine durch Emulsionspolymerisation hergestellte wässerige Dispersion von Polyvinylacetat-Homopolymer. Die Dispersion enthielt Polyvinylalkohol als Schutzkolloid. Außerdem enthielt die Dispersion als Vernetzer einen als Bisulfitaddukt maskierten Polyaldehyd gemäß EP-A-0 686 682. Der Feststoffgehalt der Dispersion beträgt 48 - 50 Gew. %; die Viskosität, ermittelt nach Brookfield, RVT 6/20 beträgt 8.000 - 16.000 mPa*s. Zu 100 Teilen der Dispersion wurden 5 Teile einer 54 % Lösung von Aluminiumchloridhexahydrat in Wasser als Vernetzungskatalysator gegeben. Es resultierte ein pH-Wert von 2,9.

### Beispiele 1 bis 6 und Vergleichsbeispiele V1 bis V4

### Beispiele 1 bis 3

Basisdispersion A1 wurde als Komponente A mit unterschiedlichen Mengen von TCD-Dialdehyd (Komponente B) vermischt. Die Zusammensetzungen der härtbaren Kompositionen sind nachfolgend aufgeführt; die Mengenangabe des TCD-Dialdehyds bezieht sich dabei auf die Gesamtmenge der Komponente A
Beispiel 1: 1 % TCD-Dialdehyd
Beispiel 2: 2,5 % TCD-Dialdehyd
Beispiel 3: 5 % TCD-Dialdehyd

### Beispiele 4 bis 6

Basisdispersion A2 wurde als Komponente A mit unterschiedlichen Mengen von TCD-Dialdehyd (Komponente B) vermischt. Die Zusammensetzungen der härtbaren Kompositionen sind nachfolgend aufgeführt; die Mengenangabe des TCD-Dialdehyds bezieht sich dabei auf die Gesamtmenge der Komponente A
Beispiel 4: 1 % TCD-Dialdehyd
Beispiel 5: 2,5 % TCD-Dialdehyd
Beispiel 6: 5 % TCD-Dialdehyd

### Beispiele 7 bis 8

Basisdispersion A1 wurde als Komponente A mit unterschiedlichen Mengen von Vinylcyclohexendialdehyd (VCHDA; Isomerengemisch aus Verbindungen der Formeln II und IV; Komponente B) vermischt. Die Zusammensetzungen der härtbaren Kompositionen sind nachfolgend aufgeführt; die Mengenangabe des VCHDA bezieht sich dabei auf die Gesamtmenge der Komponente A:
Beispiel 7: 2,5 % VCHDA
Beispiel 8: 5 % VCHDA

### Beispiele 9 bis 10

Basisdispersion A2 wurde als Komponente A mit unterschiedlichen Mengen von VCHDA (Komponente B) vermischt. Die Zusammensetzungen der härtbaren Kompositionen sind nachfolgend aufgeführt; die Mengenangabe des VCHDA bezieht sich dabei auf die Gesamtmenge der Komponente A:
Beispiel 9: 2,5 % VCHDA
Beispiel 10: 5 % VCHDA

### Vergleichsbeispiel V1

Basisdispersion A1 wurde als Klebstoff-Formulierung verwendet.

### Vergleichsbeispiel V2

Basisdispersion A2 wurde als Klebstoff-Formulierung verwendet.

### Vergleichsbeispiel V3

Basisdispersion A1 wurde als Komponente A mit einer Lösung eines kommerziell erhältlichen Polyisocyanats auf Basis Diphenylmethandüsocyanat; NCO-Gehalt ca. 31%, Desmodur^{®} VK-1 0 der Bayer AG) (Komponente B) vermischt. Die Menge an Komponente B betrug 15 Gew. %, bezogen auf die Komponente A.

### Vergleichsbeispiel V4

Basisdispersion A2 wurde als Komponente A mit einer Lösung eines kommerziell erhältlichen Polyisocyanats auf Basis Diphenylmethandiisocyanat; NCO-Gehalt ca. 31%, Desmodur^{®} VK-1 0 der Bayer AG) (Komponente B) vermischt. Die Menge an Komponente B betrug 15 Gew. %, bezogen auf die Komponente A.

### Beispiel 11

Basisdispersion A3 wurde als Komponente A mit 1 % von TCD-Dialdehyd (Komponente B) vermischt.

### Vergleichsbeispiel V5

Basisdispersion A3 wurde als Klebstoff-Formulierung verwendet.

### Anwendungstechnische Prüfungen

Es wurden die Reißfestigkelten an Buchenholzprüflingen nach Kochwasserbehandlung gemäß der Prüfnorm DIN EN 204/D4 ermittelt.

Die Herstellung der Prüfkörper erfolgte nach der Vorgehensweise der DIN EN 205 (vormals DIN 53254). Die Verleimung und Prüfung wurde unter Berücksichtigung folgender Kenndaten durchgeführt.:

| | |
|---|---|
| Leimauftrag: | 150 ± 20 g/m² beidseitiger Auftrag |
| Offene Wartezeit: | 3 Minuten |
| Geschlossene Wartezeit: | 3 Minuten |
| Preßzeit: | 2 Stunden |
| Preßdruck: | 0,7 ± 0,1 N/mm² |
| Anzahl Prüfkörper pro Prüffolge: | 20 |
| Prüfung nach Lagerungsfolge gemäß DIN EN 204 D4/5: | 7 Tage Normalklima^{*)} |
| | 6 Stunden in kochendem Wasser |
| | 2 Stunden in kaltem Wasser |
| Prüftemperatur: | 23 °C ± 2 'C |
| Vorschubgeschwindigkeit: | 50 mm/Min. |
| Die Einordnung in die Beanspruchungsgruppe D4/5 erfolgte bei einer Reißfestigkeit von >= 4 N/mm² | |

| | |
|---|---|
| *> 23 ± 2 ° C und 50 ± 5 % relative Luftfeuchte | |

Die Ergebnisse der Naßklebfestigkeitsprüfungen sind in der folgenden Tabelle dargestellt. Nach beendeter Prüfung wurde darüberhinaus das Bruchbild der Prüflinge einzeln beurteilt und der prozentuale Substratbruch (Holzfaserausriss) bezogen auf die gesamte verklebte Fläche bestimmt. Der in der Tabelle angegebene Wert ist der Mittelwert der prozentualen Ausrisse aller beurteilten Prüflinge innerhalb einer Meßserie.

**Tabelle**

| Beispiel | Basis-dispersion | Härterzusatz % auf Dispersion | Zugscherfestigkeit gemäß DIN EN 204 D4/5 (N/mm²) | Faserausriss in % der verklebten Fläche |
|---|---|---|---|---|
| 1 | A1 | 1 | 6,3 | 40 |
| 2 | A1 | 2,5 | 7,6 | 30 |
| 3 | A1 | 5 | 8,3 | 40 |
| 7 | A1 | 2,5 | 6,3 | 80 |
| 8 | A1 | 5 | 7,2 | 100 |
| V1 | A1 | - | 2,0 | 0 |
| V3 | A1 | 15 | 5,5 | 0 |
| 4 | A2 | 1 | 6,7 | 60 |
| 5 | A2 | 2,5 | 6,5 | 60 |
| 6 | A2 | 5 | 6,7 | 70 |
| 9 | A2 | 2,5 | 6,3 | 70 |
| 10 | A2 | 5 | 6,2 | 60 |
| V2 | A2 | - | 5,0 | 0 |
| V4 | A2 | 15 | 6,6 | 60 |

Die nicht der Erfindung entsprechenden Vergleichsbeispiele V3 und V4 betreffen einen Klebstoff, der den handelsüblichen Polyisocyanat-Vemetzer Desmodur^{®} VK-10 (Bayer AG) gemäß dem Stand der Technik enthält. Dem gegenüber weisen die zugehörigen erfindungsgemäßen Beispiele mit den erfindungsgemäß ausgewählten Dialdehyden TCD-Dialdehyd und VCHDA bei Verwendung wesentlich geringer Mengen zumindest vergleichbare, häufig aber deutlich bessere Naßklebfestigkeiten auf.

Zweifacher Kochwasserbelastungstest (,Two-Cycle-Boil-Test') an Gelbbirkenfurnier in Anlehnung an US-amerikanischen Standard ANSI/HPVA HP-1-2004 Plywood-Test Type I

Aus nordamerikanischem Gelbbirken-Furnier der Dicke 1,6 mm wurde pro Dispersionsmuster ein dreilagiger Prüfkörper hergestellt. Die Verklebung erfolgte unter Einhaltung folgender Parameter:

| | |
|---|---|
| Leimauftrag: | 150 ± 20 g/m² beidseitiger Auftrag |
| Offene Wartezeit: | <3 Minuten |
| Geschlossene Wartezeit: | <3 Minuten |
| Preßzeit: | 4 Stunden |
| Preßdruck: | 0,7 ± 0,1 N/mm² |
| Anzahl Prüfkörper pro Prüffolge: | 4 |
| Prüfung nach | 7 Tagen bei 21 °C und 50 % Luftfeuchte |

Aus dem Prüfkörper wurden je 4 Prüflinge mit der Dimension 3 * 3 inch (7,62 * 7,62 mm) ausgesägt und folgender Lagerungsfolge unterzogen:
1) 4 Stunden Behandlung in kochendem Wasser
2) Anschließende 20-stündige Trocknung bei 60 +/ 3 °C
3) Erneute 4-stündige Behandlung in kochendem Wasser
4) Anschließende 3-stündige Trocknung bei 60 +/ 3 °C

Nach Abschluß der Lagerungssequenz wird die Fugenöffnung der Prüfkörper visuell beurteilt. Ein Prüfkörper gilt als nicht bestanden, wenn seine Fugenöffnung durchgehend ein inch (2,54 cm) oder mehr beträgt. Pro Prüffolge müssen 90 % oder mehr der Prüflinge bestehen, wenn der Two-Cycle-Boil-Test innerhalb des Type I - Tests für das Produkt als bestanden gelten soll.

### Ergebnisse

| Beispiel | Basis-dispersion | Härterzusatz % auf Disp. | Anzahl Prüfkörper mit Fugenöffnung > 1 inch | Testergebnis |
|---|---|---|---|---|
| 11 | A3 | 1 | 0 von 4 | Bestanden |
| V5 | A3 | - | 4 von 4 | Durchgefallen |

## Patentansprüche

1. Zusammensetzung enthaltend mindestens eine wäßrige Polymerdispersion, wobei das Polymer abgeleitet ist von mindestens einem radikalisch polymerisierbaren ethylenisch ungesättigten Monomeren ausgewählt aus der Gruppe der Homo-oder Copolymeren ein oder mehrerer Vinylester, der Copolymeren von Vinylestern mit Estern α, β-ethylenisch ungesättigter C₃-C₈-Mono- oder Dicarbonsäuren mit C₁-C₈-Alkanolen, der Copolymeren von Vinylestern mit Olefinen, der Terpolymeren von Vinylestern, Ethen und Estern α, β-ethylenisch ungesättigten C₃-C₈-Mono- oder Dicarbonsäuren mit C₁-C₈-Alkanolen, der Homo-oder Copolymeren von Estern der Acrylsäure und/oder der Methacrylsäure oder der Copolymeren des Styrols mit Butadien und/oder mit Estern α, β-ethylenisch ungesättigter C₃-C₈-Mono- oder Dicarbonsäuren mit C₁-C₈-Alkanolen, und enthaltend mindestens ein Schutzkolloid und/oder mindestens einen Emulgator, sowie mindestens einen cycloaliphatischen Kohlenwasserstoff mit zwei bis sechs Aldehydgruppen, wobei das Polymer und/oder das Schutzkolloid und/oder der Emulgator mit Aldehyden vernetzbare Gruppen aufweist ausgewählt aus der Gruppe der aktivierten Methylengruppen, der Amino-, Amido-, Ureido oder Hydroxylgruppen.

2. Zusammensetzung nach Anspruch 1, **dadurch gekennzeichnet, dass** es sich um eine Mehrkomponenten-Zusammensetzung enthaltend mindestens eine Komponente A und mindestens eine Komponente B handelt, wobei Komponente A eine wässrige Polymerdispersion mit einem pH-Wert von 2 bis 7 ist, welche
a) mindestens ein Polymer enthält, das ausgewählt wird aus der Gruppe der von Vinylestern abgeleiteten Polymeren, der von Estern α, βethylenisch ungesättigter C₃-C₈-Mono- oder Dicarbonsäuren abgeleiteten Polymeren und/oder der von Alkenylaromaten abgeleiteten Polymeren, und
b) mindestens ein Schutzkolloid und/oder mindestens einen Emulgator enthält, wobei
c) das Polymer und/oder das Schutzkolloid und/oder der Emulgator mit Aldehyden vernetzbare Gruppen aufweist, und wobei
Komponente B einen cycloaliphatischen Kohlenwasserstoff mit zwei bis sechs Aldehydgruppen enthält.

3. Zusammensetzung nach Anspruch 1, **dadurch gekennzeichnet, dass** das Polymer ausgewählt wird aus der Gruppe der von Vinylacetat abgeleiteten Homo-oder Copolymeren, der Copolymeren von Vinylestern mit Estern der Acrylsäure und/oder der Methacrylsäure und/oder der Fumarsäure und/oder der Maleinsäure mit C₁-C₈-Alkanolen, der Copolymeren von Vinylacetat mit Ethylen, der Terpolymeren von Vinylestern, Ethylen und Estern der Acrylsäure und/oder der Methacrylsäure und/oder der Fumarsäure und/oder der Maleinsäure mit C₁-C₈-Alkanolen, der Homo- oder Copolymeren von Estern der Acrylsäure und/oder der Methacrylsäure, der Copolymeren des Styrols mit Butadien und/oder mit Estern der Acrylsäure und/oder der Methacrylsäure mit C₁-C₈-Alkanolen.

4. Zusammensetzung nach Anspruch 1, **dadurch gekennzeichnet, dass** das Polymer ein Polyvinylester ist, der mindestens 50 Gew.-% Vinylacetat-Monomereinheiten enthält.

5. Zusammensetzung nach Anspruch 1, **dadurch gekennzeichnet, dass** das Polymere Monomereinheiten enthält, die sich ableiten von ethylenisch ungesättigten Monomeren enthaltend N-funktionelle Gruppen und/oder von ethylenisch ungesättigten Monomeren enthaltend hydroxyfunktionelle Gruppen und/oder von ethylenisch ungesättigten Monomeren enthaltend vernetzbare Carbonylgruppen und/oder ethylenisch ungesättigten Monomeren enthaltend Silangruppen und/oder ethylenisch ungesättigten Monomeren enthaltend Epoxidgruppen.

6. Zusammensetzung nach Anspruch 1, **dadurch gekennzeichnet, dass** die Polymerdispersion mindestens ein Schutzkolloid enthält, vorzugsweise Polyvinylalkohol.

7. Zusammensetzung nach Anspruch 2, **dadurch gekennzeichnet, dass** Komponente B mindestens einen cycloaliphatischen Dialdehyd enthält.

8. Zusammensetzung nach einem der Ansprüche 1 bis 7, **dadurch gekennzeichnet, dass** der cycloaliphatische Kohlenwasserstoff mit zwei bis sechs Aldehydgruppen eine Verbindung der Formeln I bis IX oder ein Gemisch von zwei oder mehreren dieser Verbindungen ist 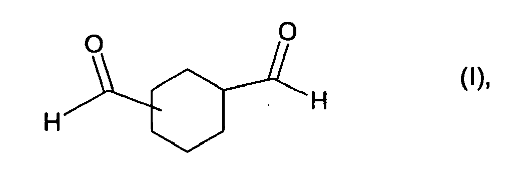 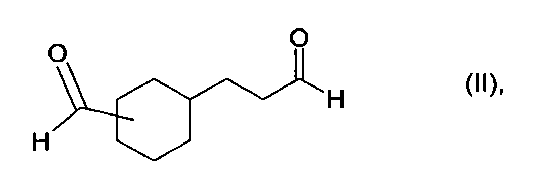 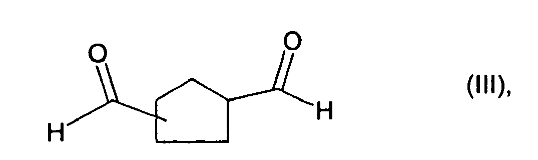 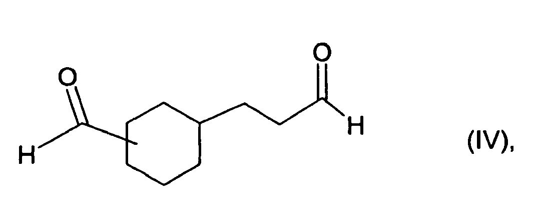 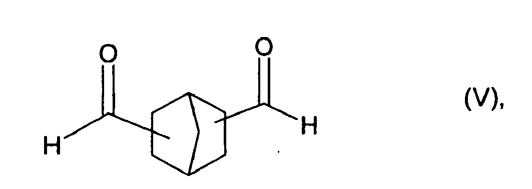 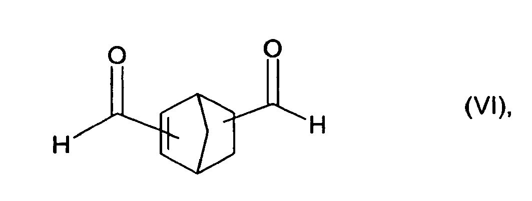 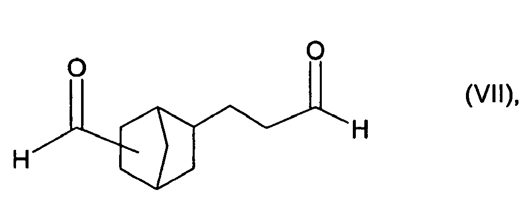 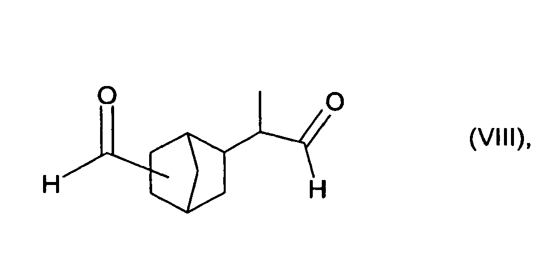 und

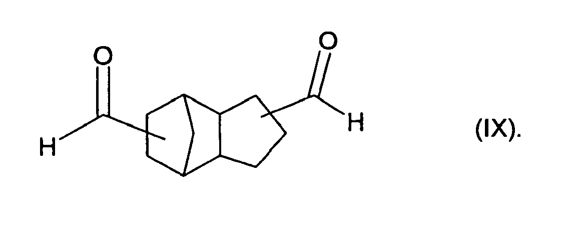

9. Zusammensetzung nach einem der Ansprüche 1 bis 8, **dadurch gekennzeichnet, dass** diese mindestens ein Additiv enthält, das ausgewählt wird aus der Gruppe der Filmbildehilfsmittel zur Emiedrigung der Mindestfilmbildetemperatur, der Weichmacher, der Puffer, der pH-Stellmittel, der Dispergiermittel, der Entschäumer, der Füllstoffe, der Farbstoffe, der Pigmente, der Silan-Kupplungsmittel, der Verdickungsmittel, der Viskositätsregler, der Lösungsmittel und/oder der Konservierungsmittel.

10. Zusammensetzung nach einem der Ansprüche 1 bis 9 **dadurch gekennzeichnet, dass** diese zusätzlich zu dem mindestens einen cycloaliphatischen Kohlenwasserstoff mit zwei bis sechs Aldehydgruppen mindestens ein weiteres niedermolekulares Vernetzungsmittel und/oder ein Vernetzerharz aufweist.

11. Zusammensetzung nach Anspruch 10, **dadurch gekennzeichnet, dass** diese als Vernetzungsmittel mindestens einen weiteren Polyaldehyd enthält.

12. Zusammensetzung nach einem der Ansprüche 1 bis 11, **dadurch gekennzeichnet, dass** diese mindestens einen teilweise maskierten Polyaldehyd enthält.

13. Zusammensetzung nach einem der Ansprüche 1 bis 12, **dadurch gekennzeichnet, dass** diese Lewis-Säuren in Form von sauren Salzen komplexierbarer Metallionen enthält, insbesondere Aluminiumchlorid, Aluminiumnitrat, Zirkonoxychlorid und Titansulfat, und ganz besonders die sauren Salze mit mehrwertigen komplexierbaren Kationen.

14. Zusammensetzung nach Anspruch 2, **dadurch gekennzeichnet, dass** wenigstens Komponente A einen pH Wert von 2,5 und 4,5 aufweist.

15. Härtbare Zusammensetzung erhältlich durch Vermischen der Komponenten A und B nach Anspruch 2.

16. Gehärtete Zusammensetzung erhältlich durch Härten der härtbaren Zusammensetzung nach Ansprüchen 1 und 15.

17. Verwendung der Zusammensetzung nach einem der Ansprüche 1 bis 15 zum Verkleben von porösen oder semiporösen Substraten.

18. Verwendung nach Anspruch 17, **dadurch gekennzeichnet, dass** das poröse oder semiporöse Substrat Papier, Pappe, Wellpappe, Schaumstoff, Zement, Leder, Textil oder ein Preßschichtstoff ist.

19. Verwendung der Zusammensetzung nach einem der Ansprüche 1 bis 15 als Klebstoff für den Baubereich, insbesondere als Fußboden-, Wand- oder Deckenklebstoff, oder als Möbelfolien- oder Teppichrückenkleber.

20. Verwendung der Zusammensetzung nach einem der Ansprüche 1 bis 15 als Klebstoff für die Verklebung von cellulosischen Substraten, vorzugsweise Massivholz oder von Holz abgeleiteten Materialien und Werkstoffen, inbesondere Furnieren, Sperrholz, Schichtholz, Lagenholz, Kunstharzpressholz, Verbundplatten, Holzfaserwerkstoffen oder Kunststoff-beschichteten dekorativen Holzfaserplatten.

21. Verwendung der Zusammensetzung nach einem der Ansprüche 1 bis 15 als Bindemittel für Holzfaserplatten oder Faserleder sowie als Bindemittel für Dämm-Materialien aus Papier- oder Kunststoff-Fasern, oder als Bindemittel für Putz oder Zement.

22. Verwendung der Zusammensetzung nach einem der Ansprüche 1 bis 15 als Bindemittel für textile Flächen, insbesondere für Non-Wovens, sowie im Textildruck und als Textilappretur.

23. Verwendung der Zusammensetzung nach einem der Ansprüche 1 bis 15 als Bindemittel für Glasfasern oder als Bindemittel für Keramik.

## Claims

1. A composition containing at least one aqueous polymer dispersion, the polymer being derived from at least one ethylenically unsaturated monomer capable of free radical polymerization, selected from the group consisting of the homo- or copolymers of one or more vinyl esters, the copolymers of vinyl esters with esters of α,β-ethylenically unsaturated C₃-C₈-mono- or dicarboxylic acids with C₁-C₈-alkanols, the copolymers of vinyl esters with olefins, the terpolymers of vinyl esters, ethene and esters of α,β-ethylenically unsaturated C₃-C₈-mono- or dicarboxylic acids with C₁-C₈-alkanols, the homo- or copolymers of esters of acrylic acid and/or of methacrylic acid or the copolymers of styrene with butadiene and/or with esters of α,β-ethylenically unsaturated C₃-C₈-mono- or dicarboxylic acids with C₁-C₈-alkanols, and containing at least one protective colloid and/or at least one emulsifier, and at least one cycloaliphatic hydrocarbon having two to six aldehyde groups, the polymer and/or the protective colloid and/or the emulsifier having groups crosslinkable with aldehydes, selected from the group consisting of activated methylene groups, amino groups, amido groups, ureido groups or hydroxyl groups.

2. The composition as claimed in claim 1, **characterized in that** it is a multicomponent composition containing at least one component A and at least one component B, component A being an aqueous polymer dispersion having a pH of from 2 to 7, which
a) contains at least one polymer which is selected from the group consisting of the polymers derived from vinyl esters, the polymers derived from esters of α,β-ethylenically unsaturated C₃-C₈-mono- or dicarboxylic acids and/or the polymers derived from alkenylaromatics, and
b) contains at least one protective colloid and/or at least one emulsifier,
c) the polymer and/or the protective colloid and/or the emulsifier having groups crosslinkable with aldehydes, and
component B containing a cyclopaliphatic hydrocarbon having two to six aldehyde groups.

3. The composition as claimed in claim 1, **characterized in that** the polymer is selected from the group consisting of the homo- or copolymers derived from vinyl acetate, the copolymers of vinyl esters with esters of acrylic acid and/or of methacrylic acid and/or of fumaric acid and/or of maleic acid with C₁-C₈-alkanols, the copolymers of vinyl acetate with ethylene, the terpolymers of vinyl esters, ethylene and esters of acrylic acid and/or of methacrylic acid and/or of fumaric acid and/or of maleic acid with C₁-C₈-alkanols, the homo- or copolymers of esters of acrylic acid and/or of methacrylic acid, the copolymers of styrene with butadiene and/or of with esters of acrylic acid and/or of methacrylic acid with C₁-C₈-alkanols.

4. The composition as claimed in claim 1, **characterized in that** the polymer is a polyvinyl ester which contains at least 50% by weight of vinyl acetate monomer units.

5. The composition as claimed in claim 1, **characterized in that** the polymer contains monomer units which are derived from ethylenically unsaturated monomers containing N-functional groups and/or from ethylenically unsaturated monomers containing hydroxy functional groups and/or from ethylenically unsaturated monomers containing crosslinkable carbonyl groups and/or ethylenically unsaturated monomers containing silane groups and/or ethylenically unsaturated monomers containing epoxide groups.

6. The composition as claimed in claim 1, **characterized in that** the polymer dispersion contains at least one protective colloid, preferably polyvinyl alcohol.

7. The composition as claimed in claim 2, **characterized in that** component B contains at least one cycloaliphatic dialdehyde.

8. The composition as claimed in any of claims 1 to 7, **characterized in that** the cycloaliphatic hydrocarbon having two to six aldehyde groups is a compound of the formulae I to IX or a mixture of two or more of these compounds 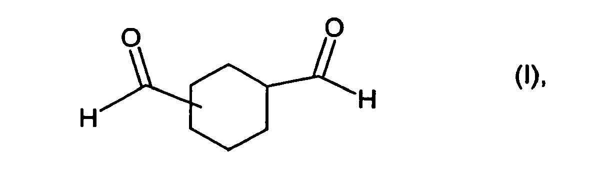 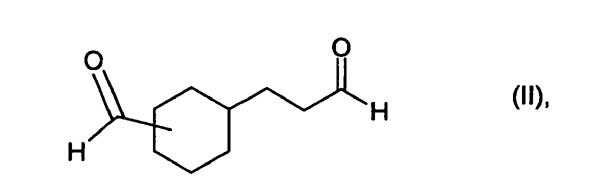 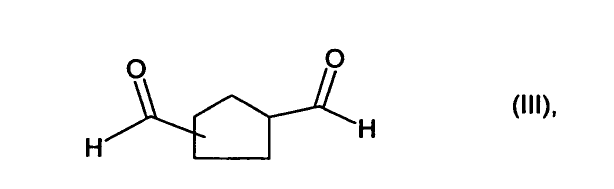 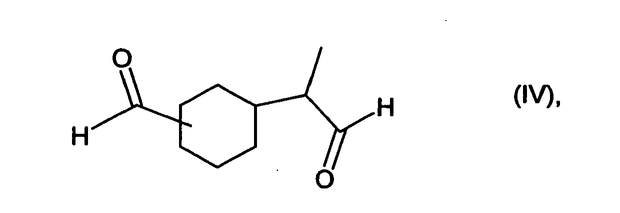 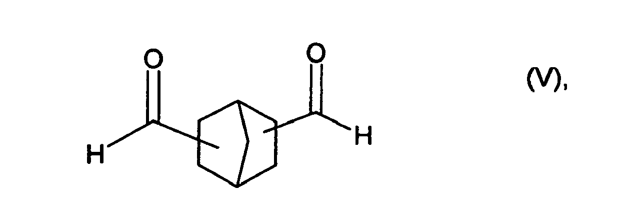 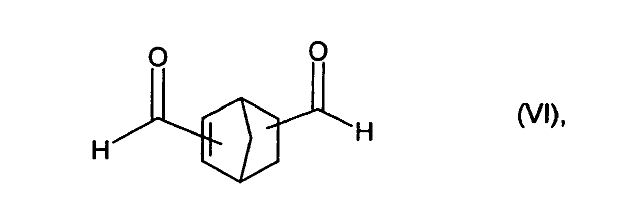 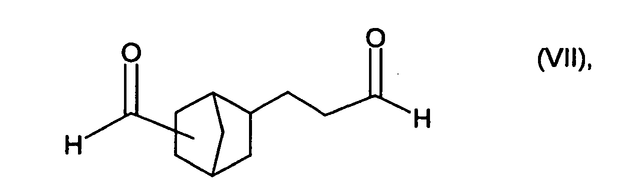 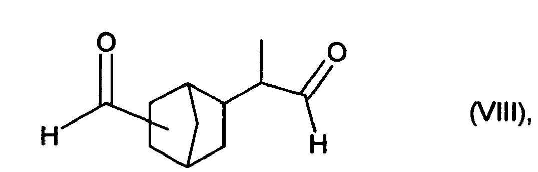 and

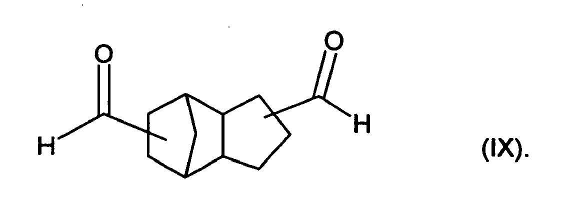

9. The composition as claimed in any of claims 1 to 8, **characterized in that** it contains at least one additive which is selected from the group consisting of the film formation auxiliaries for depressing the minimum film formation temperature, the plasticizers, the buffers, the pH adjusters, the dispersants, the antifoams, the fillers, the dyes, the pigments, the silane coupling agents, the thickeners, the viscosity regulators, the solvents and/or the preservatives.

10. The composition as claimed in any of claims 1 to 9, **characterized in that** it has, in addition to the at least one cycloaliphatic hydrocarbon having two to six aldehyde groups, at least one further low molecular weight crosslinking agent and/or a crosslinker resin.

11. The composition as claimed in claim 10, **characterized in that** it contains as crosslinking agent at least one further polyaldehyde.

12. The composition as claimed in any of claims 1 to 11, **characterized in that** it contains at least one partly masked polyaldehyde.

13. The composition as claimed in any of claims 1 to 12, **characterized in that** it contains Lewis acids in the form of acidic salts of complexible metal ions, in particular aluminum chloride, aluminum nitrate, zirconium oxychloride and titanium sulfate, and very particularly preferably the acidic salts with polyvalent complexible cations.

14. The composition as claimed in claim 2, **characterized in that** at least component A has a pH of 2.5 and 4.5.

15. A curable composition obtainable by mixing the components A and B as claimed in claim 2.

16. A cured composition obtainable by curing the curable composition as claimed in claims 1 and 15.

17. The use of the composition as claimed in any of claims 1 to 15 for adhesive bonding of porous or semiporous substrates.

18. The use as claimed in claim 17, **characterized in that** the porous or semiporous substrate is paper, board, corrugated board, foam, cement, leather, textile or an impregnated laminate.

19. The use of the composition as claimed in any of claims 1 to 15 as an adhesive for the construction sector, in particular as floor, wall or ceiling adhesive, or as furniture film or carpet backing adhesive.

20. The use of the composition as claimed in any of claims 1 to 15 as an adhesive for the adhesive bonding of cellulosic substrates, preferably solid wood or materials derived from wood and engineering materials, in particular veneers, plywood, laminated wood, glued layered wood, densified compressed wood, composite boards, wood fiber materials and plastic-coated decorative wood fiber boards.

21. The use of the composition as claimed in any of claims 1 to 15 as a binder for wood fiber boards or fiber leather and as a binder for insulating materials comprising paper fibers or plastic fibers, or as a binder for render or cement.

22. The use of the composition as claimed in any of claims 1 to 15 as a binder for textile surfaces, in particular for nonwovens, and in textile printing and as a textile finish.

23. The use of the composition as claimed in any of claims 1 to 15 as a binder for glass fibers or as a binder for ceramic.

## Revendications

1. Composition contenant au moins une dispersion aqueuse de polymère, le polymère étant dérivé d'au moins un monomère polymérisable, éthyléniquement insaturé, choisi parmi le groupe des homo- ou des copolymères d'un ou de plusieurs éthers vinyliques, des copolymères d'esters vinyliques avec des esters d'acides mono- ou dicarboxyliques en C₃ à C₈, éthyléniquement insaturés en α, β, avec des alcanols en C₁ à C₈, des homo- ou des copolymères d'esters de l'acide acrylique et/ou de l'acide méthacrylique, ou des copolymères du styrène avec le butadiène et/ou avec des esters d'acides mono- ou dicarboxyliques en C₃ à C₈, éthyléniquement insaturés en α, β, avec des alcanols en C₁ à C₈, et contenant au moins un colloïde de protection et/ou au moins un émulsionnant, ainsi qu'au moins un hydrocarbure cycloaliphatique avec deux à six groupes aldéhydes, le polymère et/ou le colloïde de protection et/ou l'émulsionnant comportant des groupes réticulables avec des aldéhydes, choisis parmi le groupe des groupes méthylènes activables, des groupes amino, amido, uréïdo ou hydroxyle.

2. Composition selon la revendication 1, **caractérisée en ce qu'**il s'agit d'une composition de plusieurs composants contenant au moins un composant A et au moins un composant B, le composant A étant une dispersion aqueuse de polymère avec un pH compris entre 2 et 7, laquelle
a) contient au moins un polymère qui est choisi parmi le groupe des polymères dérivés d'esters de vinyle, des polymères dérivés d'esters d'acides mono- ou dicarboxyliques en C₃ à C₈, éthyléniquement insaturés en α, β, et/ou des polymères dérivés de composés alcényles aromatiques, et
b) contient au moins un colloïde de protection et/ou au moins un émulsionnant, sachant que
c) le polymère et/ou le colloïde de protection et/ou l'émulsionnant comportent des groupes réticulables avec des aldéhydes, et sachant que
le composant B contient un hydrocarbure cycloaliphatique avec deux à six groupes aldéhydes.

3. Composition selon la revendication 1, **caractérisée en ce que** le polymère est choisi parmi le groupe des homo- ou des copolymères dérivés de l'acétate de vinyle, des copolymères d'esters de vinyle avec des esters de l'acide acrylique et/ou de l'acide méthacrylique et/ou de l'acide fumarique et/ou de l'acide maléique avec des alcanols en C₁ à C₈, des copolymères de l'acétate de vinyle avec l'éthylène, des terpolymères d'esters de vinyle, d'éthylène et d'esters de l'acide acrylique et/ou de l'acide méthacrylique et/ou de l'acide fumarique et/ou de l'acide maléique avec des alcanols en C₁ à C₈, des homo- ou des copolymères d'esters de l'acide acrylique et/ou de l'acide méthacrylique, des copolymères du styrène avec le butadiène et/ou avec des esters de l'acide acrylique et/ou de l'acide méthacrylique avec des alcanols en C₁ à C₈.

4. Composition selon la revendication 1, **caractérisée en ce que** le polymère est un ester de polyvinyle qui contient au moins 50 % en poids d'unités monomères d'acétate de vinyle.

5. Composition selon la revendication 1, **caractérisée en ce que** le polymère contient des unités monomères qui dérivent de monomères éthyléniquement insaturés contenant des groupes N-fonctionnels et/ou de monomères éthyléniquement insaturés contenant des groupes hydroxyfonctionnels et/ou de monomères éthyléniquement insaturés contenant des groupes carbonyles réticulables et/ou de monomères éthyléniquement insaturés contenant des groupes silanes et/ou de monomères éthyléniquement insaturés contenant des groupes époxydes.

6. Composition selon la revendication 1, **caractérisée en ce que** la dispersion de polymère contient au moins un colloïde de protection, de préférence de l'alcool polyvinylique.

7. Composition selon la revendication 2, **caractérisée en ce que** le composant B contient au moins un dialdéhyde cycloaliphatique.

8. Composition selon l'une quelconque des revendications 1 à 7, **caractérisée en ce que** l'hydrocarbure cycloaliphatique avec deux à six groupes aldéhydes est un composé des formules I à IX ou un mélange de deux ou plusieurs de ces composés 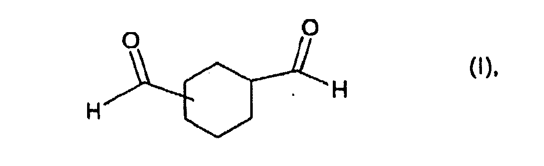 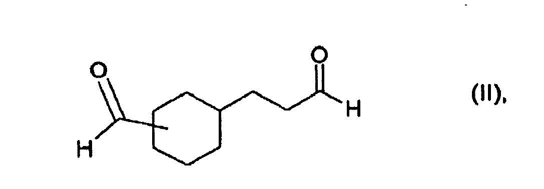 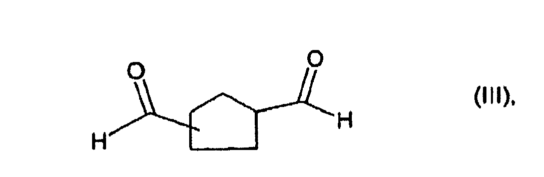 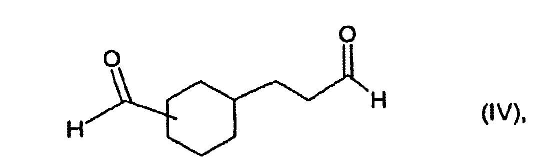 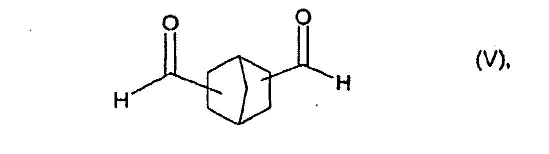 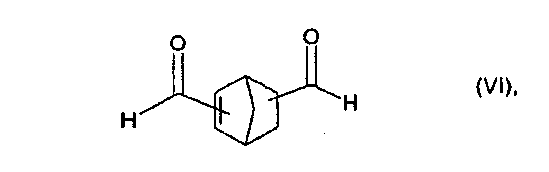 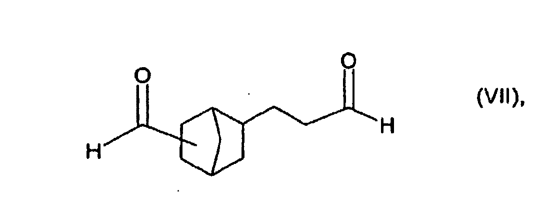 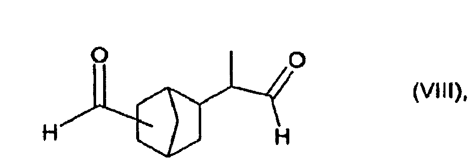 et

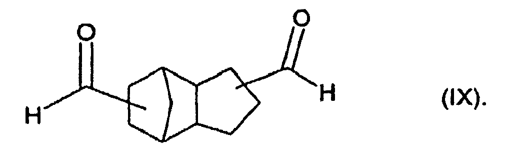

9. Composition selon l'une quelconque des revendications 1 à 8, **caractérisée en ce que** celle-ci contient au moins un additif qui est choisi parmi le groupe des auxiliaires filmogènes pour l'abaissement de la température minimale de formation de film, des plastifiants, des tampons, des ajusteurs de pH, des dispersants, des antimousses, des charges, des colorants, des pigments, des agents de couplage silanes, des épaississants, des régulateurs de viscosité, des solvants et/ou des agents de conservation.

10. Composition selon l'une quelconque des revendications 1 à 9, **caractérisée en ce que** celle-ci comporte en plus dudit au moins un hydrocarbure cycloaliphatique avec deux à six groupes aldéhydes au moins un autre agent réticulant de bas poids moléculaire et/ou une résine réticulante.

11. Composition selon la revendication 10, **caractérisée en ce que** celle-ci contient comme agent réticulant au moins un autre polyaldéhyde.

12. Composition selon l'une quelconque des revendications 1 à 11, **caractérisée en ce que** celle-ci contient au moins un polyaldéhyde partiellement masqué.

13. Composition selon l'une quelconque des revendications 1 à 12, **caractérisée en ce que** celle-ci contient des acides de Lewis sous la forme de sels acides d'ions métalliques complexables, en particulier du chlorure d'aluminium, du nitrate d'aluminium, de l'oxychlorure de zirconium et du sulfate de titane, et tout particulièrement les sels acides avec des cations complexables polyvalents.

14. Composition selon la revendication 2, **caractérisée en ce qu'**au moins le composant A présente un pH de 2,5 et de 4,5.

15. Composition durcissable, réalisable par mélange des composants A et B selon la revendication 2.

16. Composition durcie réalisable par durcissement de la composition durcissable selon les revendications 1 et 15.

17. Utilisation de la composition selon l'une quelconque des revendications 1 à 15 pour coller des substrats poreux ou semi-poreux.

18. Utilisation selon la revendication 17, **caractérisée en ce que** le substrat poreux ou semi-poreux est du papier, du carton, du carton ondulé, un matériau expansé, du ciment, du cuir, un textile ou un matériau pressé stratifié.

19. Utilisation de la composition selon l'une quelconque des revendications 1 à 15 comme colle pour le secteur du bâtiment, en particulier comme colle de plancher, de mur ou de plafond, ou comme colle de films pour meuble ou pour revers de moquette.

20. Utilisation de la composition selon l'une quelconque des revendications 1 à 15 comme colle pour le collage de substrats cellulosiques, de préférence de bois massif ou de matières et de matériaux dérivés du bois, en particulier des plaquages, des contreplaqués, du bois stratifié en direction de la longueur, du bois empilé, du bois comprimé à résine synthétique, des plaques composites, des matériaux en fibre de bois et des plaques de fibre de bois décoratives revêtues de plastique.

21. Utilisation de la composition selon l'une quelconque des revendications 1 à 15 comme liant pour des plaques de fibre de bois ou pour du cuir de fibres, ainsi que comme liants pour des matériaux insonorisants en fibres de papier ou de plastique, ou comme liant pour crépis ou ciment.

22. Utilisation de la composition selon l'une quelconque des revendications 1 à 15 comme liant pour des surfaces textiles, en particulier pour des non-tissés, ainsi qu'en impression sur textile et comme apprêt de textile.

23. Utilisation de la composition selon l'une quelconque des revendications 1 à 15 comme liant pour des fibres de verre ou comme liant pour de la céramique.
